# EUROPEAN PATENT SPECIFICATION

(11) **EP 0 237 999 B1**
(45) Date of publication and mention of the grant of the patent: **10.02.1993**
(21) Application number: 87103745.3
(22) Date of filing: 14.03.1987
(51) Int. Cl.: H04B 7/185

(54) **Monochannel multiservice terminal satellite telecommunications system**
Satellitenübertragungssystem für Einzelkanalterminals für mehrere Dienste
Système de communication par satellite pour terminaux monocanaux à pluriservices

(30) Priority: 17.03.1986 IT 4777586
(43) Date of publication of application: 23.09.1987
(73) Proprietor: SELENIA SPAZIO S.p.A., I-67100 L'Aquila (IT)
(72) Inventor: Tommasi, Marcello, I-00189 Roma (IT)
(74) Representative: Gustorf, Gerhard, Dipl.-Ing.

(56) References cited:
- US-A- 3 986 120
- US-A- 4 135 156
- IEEE GLOBAL TELECOMMUNICATIONS CONFERENCE, 2nd-5th December 1985, New Orleans, Louisiana, Conference Record vol. 1, pages 162-168, IEEE, New York, US; F. ANANASSO et al.: "A survey on the technology of multicarrier demodulators for FDMA/TDM user-oriented satellite systems"

## Description

The invention regards a satellite TLC system for single channel, multiservice terminals which provides telephone, data and other TLC services to users equipped with a terminal through an interconnection, via satellite, with a control station.

### Field of Application

The invention may be used in the civil or military field to establish telecommunication services between scattered users (rural areas, tactical units etc.) and to extend TLC services, offered by fixed networks (public telephone network, tactical networks), to such scattered users.

### The problem to be solved

The invention presented relates to a TLC system for scattered users which is based upon low cost and easily fitted user terminals and upon a regenerating transponder which has an on board switching capability to achieve interconnections between system users and ground network users through a single satellite link. The system receives commands from a control system which, as well as providing real time management, also acts as interface between the system in subject and the networks within which the system is called to operate. The use of single channel, frequency division (FDMA-SCPC) interconnections in the link of terminals to on board transponder minimizes the power required of the terminal transmitter. The use of the interconnection on a single carrier between transponder and terminals and between transponder and control station also minimizes the power required of the, on board transmitter and also makes it work close to saturation.

In particular if, as a particular case, the useful signal is digitally coded and therefore digital multiplexing and switching techniques are used in the on board transponder, further power economy advantages can be achieved thanks to error correction techniques, such as FEC (foward error correction) and implementation advantages due to the use of more simple and economic devices compared to demodulation, multiplation and switching equipment of analogue signals.

As a non limiting example, it may be assumed that the on board transponder is implemented by one or more regenerating and switching modules for TIC transponder with FDMA/TDM conversion such as that covered by patent application EP-A- 0238 000 publ. 23.09.87

### Previous Solutions

The problem of providing telecommunication services to scattered users has till now been solved using ground and satellite radio channels which interconnected the users with a radio station interfacing the fixed network. Systems based upon multiple access ground radio interconnections have a number of drawbacks such as:
- the difficulty to build reliable multiple access radio systems over largely extended areas,
- the cost of installation, which increases with the area to be served and not with the number of users,
- the difficulty with which useful free frequencies in the VHF/UHF band can be found.

Systems based upon point to point interconnection of users and access radio stations to the network are more reliable than multiple access systems, but they require a greater number of radio channels (in a ratio of about 10 to 1). Furthermore all ground systems are heavily penalised in terms of cost and complexity by the distances involved and by the local orography, as radio links develop normally along almost straight lines between points to be connected.

Systems via satellite are better suited than ground systems for scattered users because:
- they benefit of better user visibility, independently of the surface to be served and, up to a certain extent also of local orography,
- they lend themselves to the implementation of multiple access systems of good reliability,
- they make use of a number of radio channels which depends on the traffic to be handled and is independent of the number of users and of the distances involved.

While in systems implemented till now IEEE Global Telecommunications Conference, Dec. 1985, Vol. 1, pp. 162-168, New Orleans, US, F.Ananasso et al.: A survey on the technology of multicarrier demodulators for FDMA/TDM user oriented satellite systems.
- the user to station interconnection is symmetrical to that between station and user and this penalizes peripheric terminal antenna dimensions and terminal required transmitting power;
- system users interconnection, particularly frequent in civil or military tactical user areas, is through a double link through the space transponder, which therefore penalizes conversation comprehension and therefore as a result, time efficiency of the interconnection (less information in the same time).

In the solution presented by this invention, all drawbacks mentioned are eliminated,, or minimized, thanks to multiplexing and switching techniques in the on board transponders, which therefore provides a system which optimizes the use of transmission channels and power levels on ground and an board and which dispenses with the need for a two way link with the satellite when connecting two system users through the satellite transponder.

Such transponder may therefore, as a non limiting example, be implemented by adopting one or more modules as per the invention at patent application EP-A- 0238 000 publ. 23.09.87 (regenerating and switching module for telecommunications transponder with FDMA/TDM conversion functions).

### System Description

The invention will now be described with reference to one of its presently preferred forms of implementation, as a non limiting illustration.

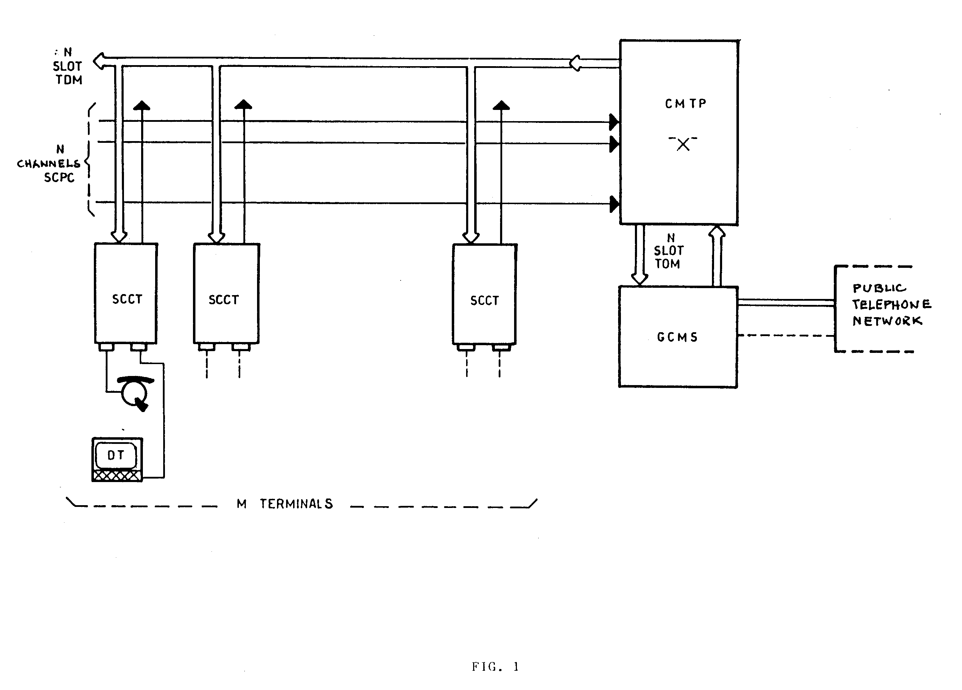

Figure 1 shows, schematically, the interconnection of the different parts of the system.

M CCT terminals, connected to each user telephone, and to optional local data terminals, have access to N FDMA channels and may deliver, on one of such channels, a RF carrier modulated by a 32 Kbps digital signal.

All terminals receive the same carrier TDM.B modulated by a digital signal organised into a TDM frame made up of N-2 useful channels, a synchro channel and a signalling channel.

The master GCMS station receives and transmits a pair of carriers TDM.A modulated by digital signals organized as described for TDM.B carrier signal

The GCMS station is connected to the local centre through a beam (loom) of interconnections and is connected with the ground network management centre through a data channel so as to exchange data relevant to billing, maintenance, management etc.

The on board transponder (CMTP Communication Transponder) has the following tasks:
- receive and regenerate TDM.A uplink carrier signals;
- receive FDMA-SCPC carries, regenerate and remultiplex received signals;
- generate and transmit TDM.A and TDM.B downlink carriers.

The services made available by the system described are:
- telefone for rural and/or moving users (with, static management post) with singlehop connection for user to user and user to network fixed telephone calls and vice versa;
- in band data service;
- high speed ( 32 Kbps inclusive of FEC) data service between users, or between users and master station and vice versa;
- high speed access to central computerized services (data banks, bank systems, booking systems);
- telemedics;
- news broadcast (newspaper, stock exchange, weather);
- teledetection data retrieval.

Assuming, as a non limiting example, that M = 1 000 we have N = 128 and if the useful signal generated by SCCTs is coded according to ADPCM technique at 32 Kbps, the signal bit rate coming from CMPT transponder is about 4 Mbps.

In the following part of the description, reference will be made to such example figures.

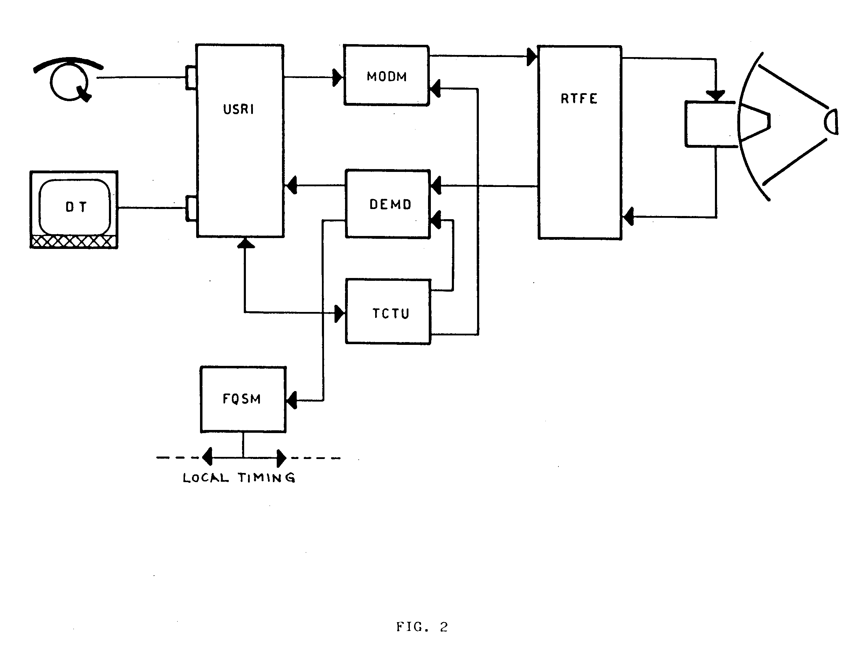

With reference to Figure 2, the structure and operation of the SCCT (Single Channel Communication Terminal) may be summarized as follows:
- The user disposes of a four wire telephone ( + signalling) and, as an option, of a data terminal for access to non telephone services: typically a video terminal with carrier or, for more evolved services, a Personal Computer. Telephone and data terminals are connected to an interface unit (USRI, User interface) which has the task to:
   - interpret the telephone selection criteria and user sent data, delivering them to the local Terminal Control Unit (TCTU) in the form of digital sequencies;
   - interpret the command sequencies arriving from TCTU transforming them into signalling criteria suitable for user terminals, (ringing device, pilot lights, data interface criteria etc.);
   - code the signal in the radio band (in band voice or data) coming from the user terminals in accordance with CEPT ADPCM 32 Kbps algorithm and supply it in digital sequential form to MODM modem, for further conversion to IF-PSK signal;
   - decode digital signal ADPCM arriving from demodulator DEMD obtaining an audio band signal to be delivered to the user terminal (audio band telephone or modem);
   - generate, upon TCTU command, "centre tones" to be delivered to the user telephone;
   - transfer to data terminal (optional) the digital sequencies received by the DEMD (which may be processed by a FEC algorithm);
   - transfer toward MODM the digital sequences received from the, data terminal (which may be processed by an FEC algorithm);
   - extract from TDM.B sequence received by the DEMD channel status information and signalling and service messages directed to SCCT making them available for the TCTU for further conditioning;
   - insert onto the digital carrier, transmitted toward the satellite, signalling patterns (engagement and register call) and register messages (signalling and service messages) as a function of the TCTU received commands.
- Useful signals (phone, in band or digital data) are then processed during transmission or reception by USRI and MODM/DEMD units, to be then converted to RF by the RTFE (Reiceive-Transmit Front End) for receive-transmit from/to satellite.
- Messages and signalling criteria and service messages required for system operation are processed by control unit TCTU (Terminal Control Unit).

In particular, TCTU has the task to:
- process data provided by USRI correspondingly to the signalling criteria coming from the user's telephone (hang up, selection etc.) activating, through USRI, the central tones required to make a call and activating, at the satellite end, access and transfer procedures of the signalling required by the system to establish the connection;
- process signalling messages coming from the master station by activating, through USRI, the criteria required for the conversation (ringing, line tones ect.);
- process service messages coming from the master station by acting, consequently, on SCCT functional parameters (number of channels available, assigned channel, up-path-power-control, number table down loading ect.);
- command receipt and further transfer toward data terminal of possible broadcast service messages (news, stock market, weather etc.) present in the TDM.B received frame and for which the terminal is enabled;
- set working frequencies of SCPC MODM DEMB units as a function of the information received through the signalling channel or in accordance with the access procedure.

Timing and frequency signals required for terminal operation are generated by a FQSM (frequency synthesizer) unit which uses as a reference TDM digital clock coming from GCMS, and received by DEMD.

The GCMS (Gateway of Control Master Station) has the task to:
- manage access procedures to FDMA channels;
- manage telephone signalling and data and call processing;
- transit to/from telephone network/ground data network the calls coming from/going to system users;
- connect system users with a special services centre through high speed data channels for non telephone services;
- system supervision.

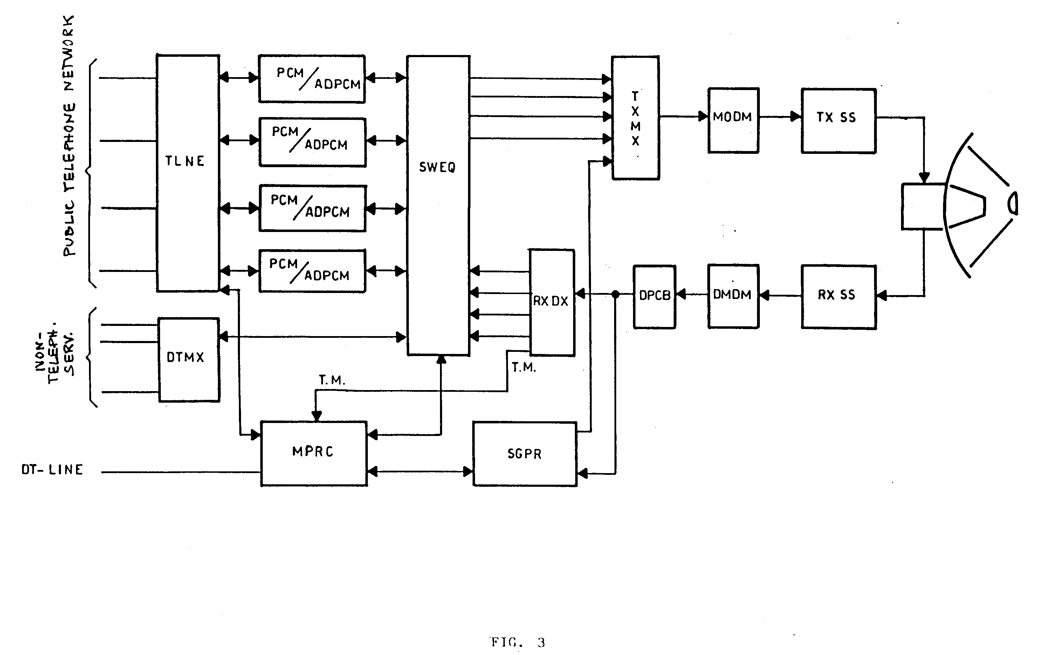

Figure 3 shows the functional diagram of the GCMS station. With reference to such diagram, GCMS operation may be briefly described as follows:
- channels coming from SCCTs, through transponder CMTP, are received on carrier TDM.A downlink by receiving subsystem RXSS, demodulator DMDM and the Doppler effect compensator DPCB;
- digital signal TDM is de-multiplexed by module RXDX which:
   - separates four communication 1.024 Mbps multichannels (32 nominal channels at 32 Kbps each) and sends them to switching matrix SWEQ;
   - extracts telemeasurement channels and sends them to the MPRC station;
- digital signal TDM.A downlink downstream the Doppler compensator buffer DPCB is sent to RXDX and also to signalling processor SGPR which has the task to:
   - monitor continuously 124 useful channels to detect possible presence of engage or register recall patterns;
   - assign dynamically to the channels which have required them, the 32 signalling reception registers which, once assigned to a channel, extract from the digital sequence the signalling messages in band inserted into the transmission by SCCT on the 32 Kbps signal;
   - transfer to MPRC signal ling messages received by SCCT through signalling reception registers;
   - carry out access control functions (ACTF), described in the following, by producing a channel status signal which is delivered on a dedicated channel through the TXMX.
- SGPR has also the task to:
   - transfer to TXMX, for further transmission, signalling and service messages generated by MPRC, which are fed into the TDM.A uplink carrier signalling channel;
   - generate, as a function of MPRC commands, telecommand and refresh signals of the on board matrix which is transmitted on a dedicated channel through the TXMX.
- Signals received and de-multiplexed by RXDX arc sent to switching matrix SWEQ which upon MPRC command:
   - switches channels used for phone communication with ground network users onto corresponding channels which are directed towards the telephone interface TIME through converters PCM/ADPCM;
   - extracts the digital channels used within the system for non telephone services, Sending them to data multiplexer DTMX.
- Telephone interface unit TLNE has the task to connect the ground side channels (coming from local centre) with satellite side channels (going to system users) by converting the telephone signalling at the network side into messages directed to station MPRC and vice versa.
- Station processor MPRC hat the task of call processing and of system supervision using TLNE as pre-processing front end of the ground side of the signalling and using SGPR as satellite side signalling pre-processing front end.
- MPRC is connected by a data line with an upper level control centre so as to deliver to it network supervision information and to receive through the same route, system pre set commands.
- MPRC uses yet a data connection to transfer to other upper level centre the information required for system traffic billing.

Access to satellite channels for SCCT and transponder connection is governed by a processing function which is implemented in master station GCMS, and in the following it will be referred to as access control function (ACTF).

ACTF function is in practice implemented by SGPR and MPRC units of master station GCMS, previously described.

For calls starting from the fixed network, ACTF assigns one of the free channels to the conversation and signals to the required user's SCCT that a call is being delivered through a common signalling channel which, for such purposes, is available, in the down link, to SCCTs.

For system user calls, ACTF sends SCPC-FDMA channel status information in a downlink subchannel.

A terminal which may need to access the system, selects one of the free channels and, tuning its SCPC modem onto such channel, sends a carrier, followed immediately by an engagement digital pattern. The ACTF unit has available an engagement pattern detector which operates on all incoming channels and, having detected the engagement, sets the channel into "indicative wait" status.

As soon as such status is detected by calling SCCT, this proceeds to send a second "call indicative" which, when correctly recognized, gives way to a change of channel status from "indicative wait" to "selection wait" and immediately after, the ACTF sends an "engage acknowledge" message only to the correctly recognized calling SCCT.

Possible collisions during the engage phase cause either missed identification of the pattern by ACTU or the identification of more consecutive patterns: in this second case the ACTU ignores successive patterns.

As the time taken for engagement pattern recognition is known (and fixed), as is that required for a channel status change, calling SCTUs check that the status change takes place during a given time frame which lasts tₒ and starts T msec after the engagement pattern has been sent: detection of a status change before time T indicates the presence of multiple engagement (collision), where the SCCT of interest has delivered its engagement pattern after that of another terminal.

Lack of status change within a given time, on the contary, is indicative of fading or collision.

Whenever collision is suspected, the call attempt has to be repeated after a time interval TR selected randomly among N possible values by the terminals which may be involved in the collision (so as to reduce repeated collision risk).

To reduce collision probability in network congested situations, SCCT terminals are self abilitated for access only during a random series of intervals which are selected so that the ratio between abilltate and non abilitate times is inversely dependent upon the occupancy percentage of useful channels.

This technique allows abilitate procedures at different access priorities (possibly charged differently) by acting upon the abilitate to non abilitate time ratioes.

As a non limiting example, we may suppose to dimension the system so that with 70% to 80% channel occupancy, an average waiting time of the "invitation to select" tone is of the order of 2 - 3 sec. and collision probability is 20% to 25%.

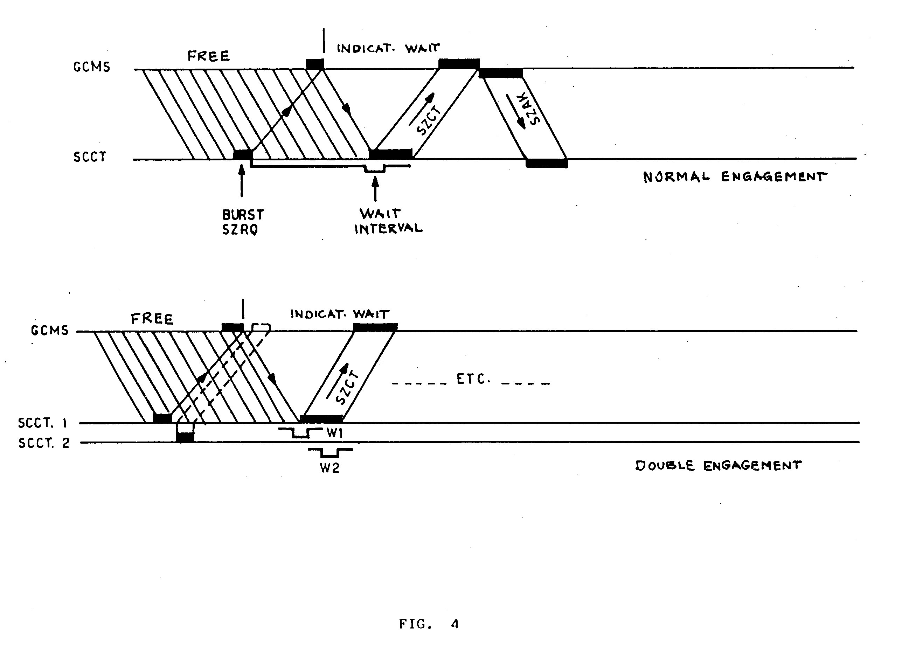

Figure 4 shows, in a time diagram, the protection mechanismus from double engagement described above.

Messages and signalling criteria are delivered in different fashions according to whether they are sent by the master, station or by peripheral terminals.

Terminal originated signalling directed to GCMS travels within FDMA-SCPC channels: that directed to terminals, is sent on a dedicated channel of the TDM frame generated by GCMS.

The signalling information contents is protected against interference by the following criteria:
- SCCT terminal originated messages:
   the message begins with a "start" message which consists of a 15 bit pseudorandom word and terminals with the same word complemented as "stop" criteria.
   The message consists of a group of M x 11 useful bits which are coded in 11 bit blocks in Golay code 21 bit blocks.
   The ensemble of M x 11 bits is divided into information fields as a function of message type: one of the information fields is an m bit "error check field" which checks parity over m useful bit sequencies (for a maximum of 2^{m} - m - 1 useful bits).
- GGMS originated messages:
   The digital channels used to transmit signalling messages originated by GCMS is organized into periodic frames.
   Such frames are organized into 4 bit slots and they contain a synchro channel through which received frames may be numbered (using a suitable super frame synchronism) With such criteria, frames are numbered module 42 and the set of 42 4 bit characters of the signalling channel slot provides eight 21 bit blocks which according to the Golay code can host 8 x 11 = 88 useful bits, i.e. eleven 8 bit characters.
   GCMS may therefore generate a continuous flow of characters for a total of 2000 characters/second = 16 Kbit/second transmitted in a Golay code protected form.

As already stated, the system may be used, as a non limiting example, to provide telephone and/or data services to rural area users, to transactional data terminals, to military networks users etc., and whenever a capillary service, not necessarily connected with high volume traffic, is required.

The system consists of a ground control station (GCMS), of a telecommunication satellite with on board transponder (CMTP) to carry out FDMA/TDM (frequency division multiple accesS - time division multiplexing) and regeneration and switching of digital signals and of the ensemble of users terminals (SCCT). Through the system described it is possible to establish telephone and data connections between SCCT terminals or GCMS terminals (and viceversa) and to establish interconnection of system users with the users of other ground networks (for which the GCMS station acts as transit interface) and to provide SCCT terminals with the access to telematic services (for which the GCMS station acts as service centre).

Interconnection of SCCT terminals and satellite is made on single SCPC-FDMA (single channel per carries - frequency division multipe access) channels; interconnection between satellite and station (and viceversa) and between satellite and terminals is made on single multichannel carries with TDM channel multiplexing. FDMA/TDM conversion takes place on board of the satellite.

## Claims

1. Satellite telecommunications system for single channel, multiservice terminals, **characterized** by the fact that more than one terminal (SCCT - Figure 1) are connected through a set of common radio channels to a regenerating transponder (CMTP - Figure 1) which has a useful signal demodulating, FDMA/TDM converting, demultiplexing, switching and re-multiplexing capability and, through this, to a control station (GCMS - Figure 1) also connected to the transponder (CMTP) by a bidirectional radio channel used for the transmission of a plurality of multiplexed useful signals, where the transponder (CMTP) is connected to the terminals (SCCT) by a unidirectional radio channel which is used for a plurality of useful signals.

2. Satellite telecommunications system- as claimed by claim 1, characterized by the fact that access of the terminals (SCCT - Figure 1) to the set of common radio channels is governed by a collision access procedure, such that all SCCT termials are informed of channel status by an information channel generated by the control station (GCMS - Figure 1) called "status channel", where the engagement request of a channel by an SCCT takes place by delivering on the designated channel a digital configuration called "engagement request", where the control station (GCMS) response to detection of an "engagement request" consists of a channel status change from "free" to "indicative wait" condition, where the time at which such change of state is detected by the terminal (SCCT) is compared with a predetermined timeframe, considering such change of state as corresponding to the engage request only when such time falls within the timeframe, where the engaging terminal (SCCT) responds to the change of state with a "call indicative" signalling message within which it sends, at least, its own indicative, where the ground control station (GCMS) responds to such message with a "confirm engage" message which ensures engage channel availability to the terminal (SCCT).

## Patentansprüche

1. Satellitenübertragunssystem für Einzelkanalterminals für mehrere Dienste, dadurch gekennzeichnet, daß mehr als ein Terminal (SCCT - Figur 1) über eine Gruppe von gemeinsamen Funkkanälen mit einem Rückkopplungstransponder (CMTP - Figur 1) verbunden sind, der die Fähigkeit zur Nutzsignal-Demodulation, FDMA/TDM-Umformung, Demultiplexion, Umschaltung und Remultiplexion hat, über den sie mit einer Steuerstation (GCMS - Figur 1) verbunden sind, die ebenfalls an den Transponder (CMTP) angeschlossen ist, und zwar über einen Zweirichtungs-Funkkanal, der zur Übertragung einer Vielzahl von Multiplex-Nutzsignalen dient, wobei der Transponder (CMTP) mit den Terminals (SCCT) über einen Einrichtungs-Funkkanal verbunden ist, der für eine Vielzahl von Nutzsignalen dient.

2. Satellitenübertragungssystem nach Anspruch 1, dadurch gekennzeichnet, daß der Zugriff der Terminals (SCCT - Figur 1) zu der Gruppe der gemeinsamen Funkkanäle über ein Kollisionszugriffsverfahren gesteuert wird derart, daß alle SCCT-Terminals über den Kanalzustand durch eine Kanalinformation informiert werden, welche "Statuskanal" genannt und von der Steuerstation (GCMS - Figur 1) erzeugt wird, wobei die Belegunsanmeldung für einen Kanal durch ein SCCT dadurch erfolgt, daß dem benannten Kanal eine "Belegungsanmeldung" genannte Digitalkonfiguration übergeben wird, während die Steuerstationsantwort (GCMS) auf die Demodulation einer "Belegungsanmeldung" aus dem Wechsel des Kanalzustandes von "frei" zu "warten" besteht, wobei die Zeit, bei der dieser Zustandswechsel durch das SCCT-Terminal erfaßt wird, mit einem vorbestimmten Zeitrahmen verglichen wird und dieser Zustandswechsel nur dann als der Belegungsanmeldung entsprechend angesehen wird, wenn die Zeit innerhalb des Zeitrahmens liegt, wobei das Belegunsterminal (SCCT) auf den Zustandswechsel mit einer eine "Rufanzeige" signalisierenden Mitteilung antwortet, innerhalb der es zumindest seine eigene Anzeige aussendet, und wobei die Bodenkontrollstation (GCMS) auf diese Mitteilung mit einer "Belegunsbestätigungs"-Mitteilung antwortet, welche dem Terminal (SCCT) die Verfügbarkeit einer Kanalbelegung sichert.

## Revendications

1. Système de télécommunication par satellite pour terminaux monocanal à services multiples, caractérisé par le fait que plus d'un terminal (SCCT - figure 1)sont reliés par l'intermédiaire d'un jeu de canaux radio communs à un répéteur de régénération (CMTP - figure 1) qui possède les capacités de démodulation du signal utile, conversion FDMA/TDM, démultiplexage, commutation et remultiplexage et, par l'intermédiaire de ce répéteur, à une station de commande (GCMS - figure 1) également reliée au répéteur (CMTP) par un canal radio bidirectionnel utilisé pour la transmission d'une pluralité de signaux utiles multiplexés, étant précisé que le répéteur (CMTP) est relié aux terminaux (SCCT) par un canal radio unidirectionnel utilisé pour une pluralité de signaux utiles.

2. Système de télécommunication par satellite comme revendiqué par la revendication 1, caractérisé par le fait que l'accès des terminaux (SCCT - figure 1) au jeu de canaux radio communs est géré par une procédure d'accès réduisant le risque de collision, de façon telle que tous les terminaux SCCT sont informés du statut du canal par un canal d'information généré par la station de commande (GCMS - figure 1) dénommé "canal de statut", étant précisé que la demande d'occupation d'un canal de la part d'un terminal de communication SCCT se fait en envoyant sur le canal désigné une configuration numérique dénommée "demande d'occupation de ligne", étant précisé que la réponse de la station de commande (GCMS) au fait qu'elle a à détecter une "demande d'occupation de ligne" consiste en un changement de statut du canal pour le faire passer de la condition "libre" à la condition "attente indicative", étant précisé que l'instant où ce changement de statut est détecté par le terminal (SCCT) est comparé avec un intervalle de temps prédéterminé, tenant compte du fait que ce changement de statut ne peut correspondre à une demande d'occupation de ligne que si cet instant tombe à l'intérieur de cet intervalle de temps, étant précisé que le terminal (SCCT) qui a demandé une occupation de ligne répond au changement de statut avec un message de signalisation "appel indicatif" dans lequel il envoie au moins son propre indicatif, étant précisé que la station de commande au sol (GCMS) répond à ce message par un message "occupation de ligne confirmée" qui met le canal ainsi occupé à la disposition du terminal (SCCT).
